(19) Europäisches Patentamt
European Patent Office
Office européen des brevets

(11) EP 3 421 568 A1

(12) # EUROPEAN PATENT APPLICATION

(43) Date of publication:
**02.01.2019 Bulletin 2019/01**

(21) Application number: **17178029.9**

(22) Date of filing: **27.06.2017**

(51) Int Cl.:
***C09K 8/035*** *(2006.01)* ***C07H 5/06*** *(2006.01)*
***C09K 8/90*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **BASF SE**
**67056 Ludwigshafen am Rhein (DE)**

(72) Inventors:
- **KIERAT, Radoslaw**
  **83352 Altenmarkt (DE)**
- **PUTZIEN, Sophie**
  **84539 Ampfing (DE)**
- **BRUCHMANN, Bernd**
  **67251 Freinsheim (DE)**
- **FLEISCHEL, Olivier**
  **67059 Ludwigshafen (DE)**
- **GIGLI, Matteo**
  **40137 Bologna (IT)**
- **MÜLHAUPT, Rolf**
  **79117 Freiburg (DE)**
- **KÜNKEL, Andreas**
  **67434 Neustadt/Wstr. (DE)**
- **LAFUENTE CERDÁ, Óscar**
  **85560 Ebersberg (DE)**

(74) Representative: **Maiwald Patent- und Rechtsanwaltsgesellschaft mbH**
**Elisenhof**
**Elisenstraße 3**
**80335 München (DE)**

(54) **USE OF OLIGOGLUCOSAMINE AS SHALE INHIBITOR**

(57) The present invention is directed to a well fluid comprising at least one oligoglucosamine and/or a salt thereof and a drilling process wherein said well fluid is applied. Further, the present invention is directed to the use of oligoglucosamines and/or salts thereof in the development, exploitation and completion of underground mineral oil and natural gas deposits and in deep wells.

EP 3 421 568 A1

## Description

The present invention is directed to a well fluid comprising at least one oligoglucosamine and/or a salt thereof and a drilling process wherein said well fluid is applied. Further, the present invention is directed to the use of oligoglucosamines and/or salts thereof in the development, exploitation and completion of underground mineral oil and natural gas deposits and in deep wells.

Shale is a fine impermeable sedimentary rock consisting of clay and other minerals. It is one of the most common rocks which have to be drilled through in oilfields to get to the oil layer. Due to its high proportion of ionically charged clay, shale has a great tendency to swell with water. This makes it a very problematic rock in deep wells with water-based drilling muds. A "shale inhibitor" has the function of preventing the shale from swelling with water.

EP 0634468 A1 describes additives for drilling muds and methods which prevent the swelling of clays in underground wells. In one embodiment, a trihydroxyalkylamine is reacted with an alkyl halide or a water-soluble quaternary amine to give a quaternized trihydroxyalkylamine. The reaction products may also include condensed reaction products of quaternized trihydroxyalky-lamines. In a further embodiment, a choline derivative is used. The quaternized reaction products and the choline derivatives are notable for low toxicity and good compatibility with anionic drilling mud components. There are reports of an improvement in rheological properties of the drilling muds and of an improvement in the environmental compatibility and compatibility with the drilling muds.

US 6,484,821 B1 describes a water-based drilling mud for drilling through formations comprising water-swellable shale. This preferably comprises a water-based continuous phase, a weighting material and a shale hydration inhibition agent of the formula $H_2N\text{-}R\text{-}\{OR'\}_x\text{-}Y$ where R and R' are each alkylene groups having 1-6 carbon atoms and x corresponds to a value of about 1 to about 25. The Y group should be an amine or alkoxy group, preferably a primary amine or a methoxy group. The shale hydration inhibition agent should be present in a concentration sufficient for the reduction of the swelling of the shale. EP 1257610 B1, which is parallel to US 6,484,821 B1, more precisely specifies a compound of the formula $H_2N\text{-}CH(CH_3)CH_2\text{-}\{OCH_2CH(CH_3)\}_x\text{-}NH_2$ as a shale inhibitor, where x has a value of less than 15.

Chemicals for offshore applications must meet strict environmental regulations. They must be nontoxic and biodegradable, and must not be bioaccumulable; see http://www.cefas.defra.gov.uk, especially http://www.cefas.defra.gov.uk/industry- information/offshore-chemical-notification-scheme.aspx, http://www.cefas.defra.gov.uk/industry-information/offshore-chemical-notification- scheme/ocns-ecotoxicology-testing.aspx and http://www.cefas.defra.gov.uk/industry-information/offshore-chemical-notification-scheme/hazard-assessment.aspx (retrieved 01.06.2011).

An et al. (Journal of Petroleum Science and Engineering, 2015, 135, 253-260) describe the application of chitosan quaternary ammonium salts as shale inhibitor. Said quaternary ammonium salts of chitosan are modified/ grafted chitosan derivatives (HTCC= N-(2-hydroxyl)-propyl-3-trimethyl ammonium chitosan chloride) which are water-soluble and biodegradable. Non-modified chitosan derivatives, however, are usually not completely soluble in alkaline water based well fluids. Therefore, the usability of non-modified chitosan derivatives as shale inhibitors in water based well fluids is limited.

Since the undesired swelling of shale only occurs in water based well fluids and not in oil based well fluids, the application of shale inhibitors like chitosan derivatives is only relevant for water based well fluids. These well fluids are disposed after use. In off-shore applications this material is usually disposed into the sea. Accordingly, there is a need in the art for an eco friendly non-modified chitosan derivative which is readily soluble in a water based well fluid.

Therefore, the problem underlying the present invention was that of providing a nontoxic biodegradable non-bioaccumulable advantageous shale inhibitor which is water soluble in non-modified form.

The foregoing and other objects are solved by the subject-matter of the present invention.

According to a first aspect of the present invention, a well fluid comprising at least one oligoglucosamine and/or a salt thereof having a weight average molecular weight Mw in the range of 500 to 20,000 g/mol is provided.

It was surprisingly found by the inventors that low molecular weight oligoglucosamines having a molecular weight in a range of 500 to 20,000 g/mol are very good shale inhibitors and are also biodegradable.

According to one embodiment of the present invention, the well fluid is a water-based well fluid.

According to another embodiment of the present invention, the well fluid comprises

i) 0.1 to 30.0 wt.-% of the at least one oligoglucosamine and/or salt thereof, and
ii) 70.0 to 99.9 wt.-% of water,

based on the overall weight of the well fluid.

According to a further embodiment of the present invention, the well fluid further comprises 0.1 to 10.0 wt.-% of a shale encapsulator, based on the overall weight of the well fluid.

It is especially preferred that the shale encapsulator is an acrylic acid copolymer.

According to one embodiment of the present invention, the well fluid further comprises 0.001 to 2.0 wt.-% of a

defoamer, based on the overall weight of the well fluid.

According to another embodiment of the present invention, the amount of acylated $NH_2$-moieties of the at least one oligoglucosamine and/or salt thereof is below 50 %, based on the overall amount of $NH_2$-moieties in the oligoglucosamine chain.

According to still another embodiment of the present invention, the at least one oligoglucosamine and/or salt thereof is obtained by

i) deacetylation of chitin, thereby obtaining chitosan, and
ii) depolymerizing the chitosan obtained in step i), thereby obtaining the at least one oligoglucosamine and/or salt thereof.

Preferably, the deacetylation according to step i) is carried out

a) in aqueous solution comprising 40.0 to 80.0 g/100 mL of a base, and/or
b) at a temperature in the range of 100 to 170 °C.

Additionally or alternatively to the previous paragraph, the depolymerization according to step ii) is carried out

a) in aqueous solution comprising 0.1 to 10.0 wt.-% of a peroxide, and/or
b) at a temperature in the range of 50 to 100 °C.

It is especially preferred that the well fluid is a drilling fluid, completion fluid or stimulation fluid.

The present invention is further directed to the use of an oligoglucosamine and/or salt thereof having a weight average molecular weight in the range of 500 to 20,000 g/mol in the development, exploitation and completion of underground mineral oil and natural gas deposits and in deep wells.

Preferably, the oligoglucosamine and/or salt thereof is used as a shale inhibitor in water-based drilling fluids, completion fluids or stimulation fluids.

The present invention is also directed to a drilling process, comprising the steps of

i) providing a well fluid as described above,
ii) pumping said well fluid into an oil well, thereby obtaining a composition comprising the well fluid and shale,
iii) pumping the composition obtained in step ii) out of the oil well.

In the following, the present invention is described in more detail.

As outlined above, the present invention is directed to well fluid comprising at least one oligoglucosamine and/or a salt thereof having a weight average molecular weight Mw in the range of 500 to 20,000 g/mol.

As used herein, the term "well fluid" is related to a fluid designed for implementing specific conditions in a well or for transporting oil, natural gases and drilling cuttings out of the well. Preferably, said well is an oil well. Next to the oligoglucosamine and/or a salt thereof, the well fluid may comprise further additives as outlined in more detail below.

As used herein, the term "oligoglucosamine" is related to a polymeric glucosamine having a molecular weight in the range of 500 to 20,000 g/mol. Oligoglucosamine may be of the following general formula (I),

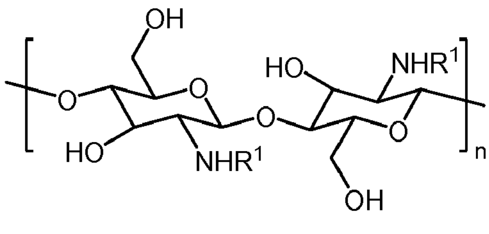

(I)

wherein n is in the range of 3 to 125 and $R^1$ is independently H or Ac with the proviso that more than 50% of the substituents $R^1$ are H.

As used herein, "Ac" stands for

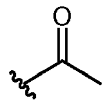.

As outlined in more detail below, the at least one oligoglucosamine and/or salt thereof of formula (I) is preferably obtained by

i) deacetylation of chitin, thereby obtaining chitosan, and
ii) depolymerizing the chitosan obtained in step i), thereby obtaining the at least one oligoglucosamine and/or salt thereof.

Chitin is a polymeric 1,4-linked 2-acetylamido-2-deoxy-β-D-glucose of formula (II)

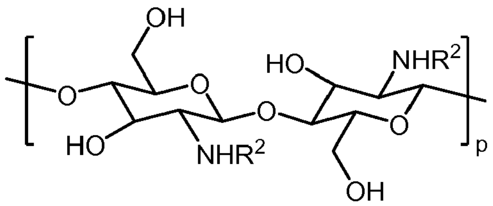

(II)

wherein p is in the range of 126 to 5000 and $R^2$ is independently H or Ac with the proviso that more than 50% of the substituents $R^2$ are Ac.

Chitin is the second most abundant polysaccharide on earth and has three different crystalline polymorphic forms according to the derived material: α-chitin, β-chitin and γ-chitin. β-chitin can be extracted from the squid pens and has a more open structure (parallel chain alignment) than α-chitin (antiparallel chain alignment) found in the crustacean exoskeletons. γ-chitin exists in cocoon fibers of the *Ptinus* beetle and the stomach of *Loligo,* and its structure shows that two chains run in one direction and another chain runs in the opposite. β-chitin shows higher solubility, swelling and reactivity than α-chitin, due to much weaker intermolecular hydrogen bonding ascribable to the parallel arrangement of the main chains. α-chitin (from crustacean shells) is however preferentially used due to its higher relative abundance.

Chitosan, the *N*-deacetylated product of chitin, is on the other hand much less naturally occurring, as it is almost exclusively produced in some cell walls of fungi. Chitosan is used in many different applications because it is biodegradable, biocompatible and possesses antifungal and antibacterial properties. Its characteristics strongly depend on the degree of acetylation (DA) and molecular weight. While chitin is insoluble in water and common organic solvents, chitosan displays solubility under acidic conditions. According to the present invention, it was found that water soluble oligoglucosamine can be obtained by chitosan depolymerisation to low molecular weight oligomers.

By deacylation of chitin, chitosan is obtained which is a polymeric glucosamine of formula (III)

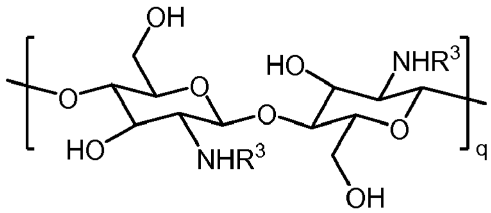

(III)

wherein q is in the range of 126 to 1500 and $R^3$ is independently H or Ac with the proviso that more than 50% of the substituents $R^3$ are H.

Chitin and chitosan (III) can hence be distinguished by the degree of deacetylation. A polymer (II) having a degree of acetylation above 50% is referred to as chitin and a polymer (III) having a degree of acetylation below 50% is referred to as chitosan.

Accordingly, it is preferred that more than 50%, more preferably more than 70%, still more preferably more than 90% of the substituents $R^2$ of formula (II) are Ac and/or more than 50%, more preferably more than 60%, still more preferably more than 70% of the substituents $R^3$ of formula (III) are H.

For the deacetylation of chitin, several methods have been proposed. Chitin deacetylases show good efficiency, but the process upscale is difficult due to the high cost of these enzymes. Chemical homogeneous and heterogeneous

deacetylations of chitin in alkaline media remain the most studied; in particular, deacetylation under heterogeneous conditions is preferentially used. In this case, highly concentrated aqueous solutions of sodium or potassium hydroxide (at least 40% w/w) at high temperatures are usually employed. With such severe conditions, chitin may undergo oxidoreductive alkaline hydrolysis responsible for a strong depolymerization. Successive deacetylation treatments are necessary to produce fully deacetylated chitosan.

According to step i) of the above mentioned process for the preparation of the at least one oligoglucosamine and/or salt thereof of formula (I), chitin is deacetylated to obtain chitosan.

Preferably, said deacetylation according to step i) is carried out under basic conditions. Accordingly, it is preferred that the deacetylation is carried out in the presence of a base such as KOH or NaOH, the latter being preferred.

Preferably, the deacetylation is carried out in an aqueous solution comprising 40.0 to 80.0 g/100 mL more preferably 45.0 to 70.0 g/100 mL, still more preferably 50.0 to 60.0 g/100 mL of the base.

Further, it is preferred that the deacetylation is carried out at elevated temperatures. Preferably the deacetylation is carried out at temperatures in the range of 100 to 170 °C, more preferably in the range of 120 to 150 °C, still more preferably in the range of 130 to 140 °C.

According to step ii) of the above mentioned process for the preparation of the at least one oligoglucosamine and/or salt thereof of formula (I), the chitosan of formula (III) obtained in step i) is subsequently depolymerized in order to obtain the oligoglucosamine having a molecular weight in the range of 500 to 20,000 g/mol of formula (I).

Preferably, the depolymerization is carried out in an aqueous solution in the presence of a peroxide. Preferably, the depolymerization is carried out in the presence of $H_2O_2$.

It is especially preferred that the depolymerization is carried out in an aqueous solution comprising 0.1 to 10.0 wt.-%, more preferably 1.0 to 5.0 wt.-%, still more preferably 3.0 to 4.5 wt.-% of the peroxide.

It is preferred that the depolymerization is carried out at elevated temperatures. In particular, it is preferred that the depolymerization is carried out at temperatures in the range of 50 to 100 °C, more preferably in the range of 60 to 90 °C, still more preferably in the range of 70 to 80 °C.

Preferably, the amount of acylated $NH_2$-moieties of the at least one oligoglucosamine and/or salt thereof is below 50 %, more preferably below 40%, still more preferably below 30%, based on the overall amount of $NH_2$-moieties in the oligoglucosamine chain.

Accordingly, it is preferred that more than 50%, more preferably more than 60%, still more preferably more than 70% of the substituents $R^1$ of formula (I) are H.

The oligoglucosamine has a molecular weight in the range of 500 to 20,000 g/mol, more preferably in the range of 600 to 15,000 g/mol, still more preferably in the range of 750 to 10,000 g/mol.

Additionally or alternatively to the previous paragraph, it is preferred that the value n of formula (I) is in the range of 3 to 125, more preferably in the range of 4 to 100, still more preferably in the range of 5 to 65.

It is preferred that the well fluid is a water based well fluid.

As used herein, the term "water" includes sea water, fresh water, tap water, deionized water, produced water as well as aqueous solutions such as brine.

In particular, it is preferred that the well fluid comprises 0.1 to 30.0 wt.-%, more preferably 0.7 to 10.0 wt.-%, still more preferably 1.0 to 3.0 wt.-% of the at least one oligoglucosamine and/or salt thereof, and 70.0 to 99.9 wt.-%, more preferably 90.0 to 99.3 wt.-%, still more preferably 97.0 to 99.0 wt.-% of water, based on the overall weight of the well fluid.

Next to the oligoglucosamine, the well fluid according to the present invention may comprise further additives.

Preferably, the well fluid further comprises a shale encapsulator.

Therefore, it is preferred that the well fluid comprises 0.1 to 30.0 wt.-%, more preferably 0.7 to 10.0 wt.-%, still more preferably 1.0 to 3.0 wt.-% of the at least one oligoglucosamine and/or salt thereof, 70.0 to 99.9 wt.-%, more preferably 90.0 to 99.3 wt.-%, still more preferably 97.0 to 99.0 wt.-% of water, and 0.1 to 10.0 wt.-%, more preferably 0.5 to 3.0 wt.-%, still more preferably 0.6 to 2.5 wt.-% of the shale encapsulator, based on the overall weight of the well fluid.

As used herein, the term "shale encapsulator" is related to a polymeric compound carrying negatively charged functional groups capable of encapsulating shale. Suitable shale encapsulators are known in the art. Non-limiting examples for shale encapsulators are acrylic acid copolymers such as partially hydrolyzed polyacrylamide and/or acrylamide-acrylate polymers.

Further, it is preferred that the well fluid comprises a defoamer.

Therefore, it is preferred that the well fluid comprises, more preferably consists of, 0.1 to 30.0 wt.-%, more preferably 0.7 to 10.0 wt.-%, still more preferably 1.0 to 3.0 wt.-% of the at least one oligoglucosamine and/or salt thereof, 70.0 to 99.9 wt.-%, more preferably 90.0 to 99.3 wt.-%, still more preferably 97.0 to 99.0 wt.-% of water, 0.1 to 10.0 wt.-%, more preferably 0.5 to 3.0 wt.-%, still more preferably 0.6 to 2.5 wt.-% of the shale encapsulator and 0.001 to 2.0 wt.-%, more preferably 0.01 to 1.0 wt.-%, still more preferably 0.1 to 0.5 wt-% of the defoamer, based on the overall weight of the well fluid.

As used herein, the term "defoamer" is related to a compound which is applied to lower the interfacial tension

of a well fluid. Non-limiting examples for suitable defoamers are octyl alcohol, aluminum stearate, glycols, silicones, sulfonated hydrocarbons, alkylphosphates such as trimethyl phosphate, triethyl phosphate, tributyl-phosphate or triisobutyl-phosphate, alkylphosphonates such as methyl phosphonate, ethyl phosphonate, butyl phosphonate or isobutyl phosphonate, or mixtures thereof.

According to one embodiment of the present invention, the well fluid is a drilling fluid.

As used herein, the term "drilling fluid" is related to a fluid, preferably water based fluid, which is used for transporting hydraulic energy to the drill bit, lubricating and cooling of the drill bit and the drilling assembly, removing drill cuttings from the well bore, suspend cuttings during static periods and to stabilize the formation against filtration, pressure damage and swelling effects in clay minerals. The terms "drilling fluid" and "drilling mud" as used herein have the same meaning and are interchangeable.

According to another embodiment of the present invention, the well fluid is a completion fluid.

As used herein, the term "completion fluid" is related to a solids free liquid which is placed in the well to facilitate final operations prior to initiation of production, such as setting screens production liners, packers, downhole valves or shooting perforations into the producing zone. The fluid is meant to control a well without damaging the producing formation or completion components. Completion fluids are typically brines such as chlorides, bromides and formates. The fluid should be chemically compatible with the reservoir formation and fluids, and is typically filtered to a high degree to avoid introducing solids to the near-wellbore area. Seldom is a regular drilling fluid suitable for completion operations due to its solids content, pH and ionic composition.

According to still another embodiment of the present invention, the well fluid is a stimulation fluid.

As used herein, the term "stimulation fluid" is related to a fluid placed in the well in order to restore or enhance the productivity of the well. Stimulation treatments fall into two main groups, hydraulic fracturing treatments and matrix treatments. Fracturing treatments are performed above the fracture pressure of the reservoir formation and create a highly conductive flow path between the reservoir and the wellbore. Matrix treatments are performed below the reservoir fracture pressure and generally are designed to restore the natural permeability of the reservoir following damage to the near-wellbore area. Stimulation in shale gas reservoirs typically takes the form of hydraulic fracturing treatments.

The present invention is further directed to the use of an oligoglucosamine and/or salt thereof having a weight average molecular weight in the range of 500 to 20,000 g/mol in the development, exploitation and completion of underground mineral oil and natural gas deposits and in deep wells.

Regarding the oligoglucosamine and/or salt thereof having a weight average molecular weight in the range of 500 to 20,000 g/mol and the process for obtaining said oligoglucosamine and/or salt thereof, reference is made to the definitions provided above.

Preferably, the oligoglucosamine and/or salt thereof is used as a shale inhibitor in water-based drilling fluids, completion fluids or stimulation fluids.

The present invention is also directed to a drilling process, comprising the steps of

i) providing a well fluid as described above,
ii) pumping said well fluid into an oil well, thereby obtaining a composition comprising the well fluid and shale,
iii) pumping the composition obtained in step ii) out of the oil well.

The scope and interest of the invention will be better understood based on the following examples which are intended to illustrate certain embodiments of the invention and are non-limitative.

Examples

**1. Measuring methods**

**Elemental analysis** was performed on a VarioEL Element Analyzer from Elementaranalysensysteme GmbH.

IR measurements were performed on a Bruker IR Spektrometer FTIR Vector 22 with ATR unit.

**Gel permeation chromatography (GPC)** was performed on a Waters Alliance 2695 separation module with Shodex OHpak SB-804HQ, SB-802.5HQ (300x8.0mm) column and Waters Refractive Index (RI) 2410 detector. Pullulan was used as calibration standard. Molecular weights were either determined by GPC, or any other method known in the art such as dynamic light scattering.

**Degree of acetylation (DA)** was calculated based on IR measurements or elemental analysis as follows:

Based on IR measurements, DA is calculated from the absorbance at 1560 and 2875 $cm^{-1}$, according to the following equation:

$$DA_{FTIR}(\%) = \frac{\left(\frac{A_{1560}}{A_{2875}} - 0.2\right)}{0.0125}$$

where $A_{1560}$ and $A_{2875}$ are respectively the absorbance at 1560 $cm^{-1}$ of the N-H bending (responsible for the N-acetyl group content) and the absorbance at 2875 cm-1 of the C-H stretching band (used as reference). The equation is the result of the construction of a standard curve obtained by plotting $A_{1560}/A_{2875}$ vs. DA (chitin/chitosan samples of known DA were employed and a liner relationship for the whole range of DA was acquired).
DA determined by elemental analysis is calculated using the following equation:

$$DA_{ElAn}(\%) = \left(\frac{\frac{C}{N}_{sample} - \frac{C}{N}_{chitosan}}{\frac{C}{N}_{chitin} - \frac{C}{N}_{chitosan}}\right) \times 100 = \frac{\frac{C}{N} - 5.14}{1.72} \times 100$$

where C/N is the ratio (w/w) of carbon to nitrogen, 5.14 is the C/N ratio of fully deacetylated chitosan and 1.72 is the C/N ratio of chitin (DA = 100%).

The **rheology profile** was determined with a FANN® 35 viscometer.

**pH measurements** were performed with an Almemo® measuring instrument or by litmus test.

**Bulk hardness** was determined on a cuttings hardness tester (internally manufactured analogous to the procedure described by Patel et al. (Highly Inhibitive Water-Based Fluid System Provides Superior Chemical Stabilization of Reactive Shale Formations, 2001, National Drilling Conference, Houston, Texas, US).

**2. Preparation of Oligoglucosamines**

Chitosan from crab shells (highly viscous, flakes) has been purchased from Sigma-Aldrich. The degree of acetylation (DA) was equal to 22% and 28% when calculated by elemental analysis and IR, respectively.
The reaction was performed as known in the literature, using $H_2O_2$ at elevated temperatures (F. Tian, Y. Liu, K. Hu, B. Zhao. Carbohydrate Polymers, 2004, 57, 31-37; C.Q. Qin, Z.M. Du, L. Xiao. Polymer Degradation and Stability 2002, 76, 211-218).

The reaction parameters have been varied: $H_2O_2$ concentration (2-5% w/w), temperature (70-90°C) and reaction time (2.5-5.5 h). The solution concentration was equal to 20 - 100 ml per gram of chitosan. Reactions were conducted in a round bottom flask equipped with a magnetic stirrer in a silicone oil bath maintained at the desired temperature. The depolymerizations were stopped by immersion of the reaction flask in icy water. $H_2O_2$ decomposition was performed by addition of sodium thiosulphate or $MnO_2$. The undissolved chitosan flakes were removed by filtration and the product was recovered by precipitation in acetone or isopropanol or by centrifugation (13000 rpm, 15 min, 20°C). Oligoglucosamine powder was dried under vacuum to constant weight or used as concentrated aqueous solution by concentrating it with a rotavapor.

The conditions for the preparation of Oligoglucosamine 1 are summarized in Table 1 a and the properties in Table 1 b.

**Table 1a:** Conditions for the preparation of Oligoglucosamine 1

| Sample | Scale (g) | Solvent conc. (v/w) | $H_2O_2$ conc. (v/v) | T(°C) | Reaction time (h) |
|---|---|---|---|---|---|
| Oligoglucosamine 1 | 100 | 20 ml/g | 3.5% | 80 | 4 |

**Table 1b:** Properties of Oligoglucosamine 1

| Sample | C (%) | H (%) | N (%) | N/C | $M_w$ (g/mol) | PDI |
|---|---|---|---|---|---|---|
| Oligoglucosamine 1 | 43.41 | 6.74 | 6.09 | 0.140 | 3300 | 3.1 |

Oligoglucosamine 1 was obtained and used as 25% aqueous solution:

A commercially available Oligoglucosamine 2 (Heppe Medical Chitosan GmbH, 100%, MW < 5 kDa) was used as a reference.

The commercially available polyamine-based shale inhibitor Ultrahib® by Schlumbergerwas used as comparative example.

**3. Test Results Oligoglucosamines**

Shale Inhibitor Performance Testing:

The below named shale performance testing procedure as described by Stephens et al. (Laboratory Methods to Assess Shale Reactivity with Drilling Fluids, AADE Technical Conference & Exhibition New Orleans, Lousiana, US, 2009) and Patel et al. (Highly Inhibitive Water-Based Fluid System Provides Superior Chemical Stabilization of Reactive Shale Formations, 2001, National Drilling Conference, Houston, Texas, US) and API recommended practices were used to evaluate the inhibition properties of the new Oligoglucosamine material as compared to Ultrahib® (liquid polyamine primary shale inhibitor by Schlumberger) and Polylysine. The standard protocols include: rheology profile before and after ageing, cuttings hardness test and dispersion (sieve) test.

Rheology profile before and after ageing:

The rheology tests were conducted with alkaline 8.5% bentonite slurry (pH > 7.5), as described below with added shale inhibitor amount of 0.7% and with an optional 3% salt (NaCl) concentration in the bentonite slurry. No other additives were added to the system. Typical procedure was the following: a 900 ml Hamilton Beach® mixing cup was filled with 350 ml tap water, then 2.5 g of shale inhibitor was added and optionally 10.5 g NaCl was added. Then 30 g bentonite (Cebogel Premium NT) was added and mixed for 10 min at "low" speed in the Hamilton Beach® mixer. During the mixing the pH value was recorded and controlled. After 10 minutes, the rheology profile was determined with the FANN® 35 viscometer. Next, the mixture was added into pressurized cells with a nitrogen gas cap. The mixture was dynamically aged for 16 h at 94°C in a hot roller oven (OFI Testing Equipment®, US). The cells were cooled for 30 min in the air and then 30 min submersed in water. The vessels were opened and the mixture was poured into the Hamilton Beach® mixing cup and stirred for 5 min at "low" speed. Finally, the rheology was measured again with the FANN® 35 viscometer. The pH value and the rheology profiles were determined. The results without addition of NaCl are given in Table 2a, those with added NaCl in Table 3a. Tables 2b and 3b show the same results converted into SI-units.

**Table 2a:** Results without addition of NaCl

| Sample | Ageing | Rheology Fann® 35 reading [lb/ 100 ft$^2$] | | | | | | PV[1)] [cP] | YP[2)] [lb/ 100 ft$^2$] | Gel strength [lb/100 ft$^2$] |
|---|---|---|---|---|---|---|---|---|---|---|
| | | 600 | 300 | 200 | 100 | 6 | 3 | | | |
| Blank | Before | 45 | 33 | 28 | 22 | 15 | 16 | 12 | 21 | 22/48 |
| | After | 64 | 44 | 37 | 28 | 15 | 15 | 20 | 24 | 27/48 |
| Ultrahib® | Before | 109 | 92 | 89 | 86 | 75 | 60 | 17 | 75 | 43/83 |
| | After | 21 | 9 | 8 | 3 | 1 | 0 | 12 | -3 | 1/2 |
| Oligoglucosamine 1 | Before | 96 | 77 | 70 | 64 | 52 | 52 | 19 | 58 | 47/47 |
| | After | 24 | 15 | 12 | 8 | 2 | 2 | 9 | 6 | 7/10 |
| Oligoglucosamine 2 | Before | 31 | 21 | 17 | 13 | 7 | 7 | 10 | 11 | 18/36 |
| | After | 24 | 15 | 12 | 8 | 3 | 3 | 9 | 6 | 6/16 |

**Table 2b:** Results without addition of NaCl (SI-units)

| Sample | Ageing | Rheology Fann® 35 reading [Pa] | | | | | | PV[1)] [mPa·s] | YP[2)] [Pa] | Gel strength [Pa] |
|---|---|---|---|---|---|---|---|---|---|---|
| | | 600 | 300 | 200 | 100 | 6 | 3 | | | |

(continued)

| Sample | Ageing | Rheology Fann® 35 reading [Pa] | | | | | | PV1) [mPa·s] | YP2) [Pa] | Gel strength [Pa] |
|---|---|---|---|---|---|---|---|---|---|---|
| Blank | Before | 21.5 | 15.8 | 13.4 | 10.5 | 7.2 | 7.6 | 12 | 10.1 | 10.5/23.0 |
| | After | 30.6 | 21.1 | 17.7 | 13.4 | 7.2 | 7.2 | 20 | 11.5 | 12.9/23.0 |
| Ultrahib® | Before | 52.2 | 44.1 | 42.6 | 41.2 | 35.9 | 28.7 | 17 | 35.9 | 20.6/39.8 |
| | After | 10.1 | 4.3 | 3.8 | 1.4 | 0.5 | 0 | 12 | -1.4 | 0.5/0.9 |
| Oligoglucosamine 1 | Before | 46.0 | 36.8 | 33.5 | 30.6 | 24.9 | 24.9 | 19 | 27.8 | 22.5/22.5 |
| | After | 11.5 | 7.2 | 5.7 | 3.8 | 0.9 | 0.9 | 9 | 2.9 | 3.3/4.8 |
| Oligoglucosamine 2 | Before | 14.8 | 10.1 | 8.1 | 6.2 | 3.3 | 3.3 | 10 | 5.2 | 8.6/17.2 |
| | After | 11.5 | 7.2 | 5.7 | 3.8 | 1.43 | 1.4 | 9 | 2.8 | 2.9/7.6 |

**Table 3a:** Results with addition of NaCl

| Sample | Ageing | Rheology Fann® 35 reading [lb/ 100 ft²] | | | | | | PV1) [cP] | YP2) [lb/ 100 ft²] | Gel strength [lb/100 ft²] |
|---|---|---|---|---|---|---|---|---|---|---|
| | | 600 | 300 | 200 | 100 | 6 | 3 | | | |
| Blank | Before | 8 | 6 | 5 | 3 | 2 | 1 | 2 | 4 | 2/3 |
| | After | 13 | 9 | 8 | 6 | 3 | 3 | 4 | 5 | 5/9 |
| Ultrahib® | Before | 6 | 3 | 2 | 1 | 0 | 0 | 3 | 0 | 3/1 |
| | After | 5 | 3 | 2 | 1 | 0 | 0 | 2 | 1 | 1/1 |
| Oligoglucosamine 1 | Before | 10 | 6 | 5 | 4 | 1 | 1 | 4 | 2 | 4/6 |
| | After | 7 | 4 | 3 | 2 | 1 | 0 | 3 | 1 | 1/3 |

**Table 3b:** Results with addition of NaCl (SI-units)

| Sample | Ageing | Rheology Fann® 35 reading [Pa] | | | | | | PV1) [mPa·s] | YP2) [Pa] | Gel strength [Pa] |
|---|---|---|---|---|---|---|---|---|---|---|
| | | 600 | 300 | 200 | 100 | 6 | 3 | | | |
| Blank | Before | 3.8 | 2.9 | 2.4 | 1.4 | 0.9 | 0.5 | 2 | 1.9 | 0.9/1.4 |
| | After | 6.2 | 4.3 | 3.8 | 2.9 | 1.4 | 1.4 | 4 | 2.4 | 2.4/4.3 |
| Ultrahib® | Before | 2.9 | 1.4 | 0.9 | 0.5 | 0 | 0 | 3 | 0 | 1.4/0.5 |
| | After | 2.4 | 1.4 | 0.9 | 0.5 | 0 | 0 | 2 | 0.5 | 0.5/0.5 |
| Oligoglucosamine 1 | Before | 4.8 | 2.9 | 2.4 | 1.9 | 0.5 | 0.5 | 4 | 0.9 | 1.9/2.9 |
| | After | 3.3 | 1.9 | 1.4 | 0.9 | 10.5 | 0 | 3 | 0.5 | 0.5/1.4 |

1) Plastic Viscosity
2) Yield Point

The results show a decrease in YP after ageing particularly in the test system in fresh water (without addition of NaCl). In the reference the YP increases from 21 to 24 lb/100 ft$^2$ (10.5 to 11.5 Pa) whereas with Ultrahib the YP decreases from 75 to -3 lb/100 ft$^2$ (35.9 to -1.4 Pa). The Glucosamine 1 shows a decrease from 58 to 6 lb/100 ft$^2$ (27.8 to 2.9 Pa) and the Glucosamine 2 shows a decrease from 11 to 6 lb/100 ft$^2$ (5.2 to 2.8 Pa).

Therefore, the rheological behavior of the compositions containing the inventive oligoglucosamine is comparable with the rheological behavior of the commonly used polyamine-based shale inhibitor Ultrahib®.

Dispersion (Sieve) Test

A drilling fluid was prepared from 305 g of sea water, 50 g of 10 % bentonite suspension in tap water, the given amount of the respective shale inhibitor, 1 drop of defoamer (Degressal SD21 by BASF) and 2.5 g of an encapsulator (IDCAP D by Schlumberger). The drilling fluid was divided into two halves for two independent measurements which were averaged. To each portion of the drilling fluid, 25 g of cuttings (Bentone GWB, 2-5 mm, Tolsa, Middlesbrough, GB) was added. The mixture was rolled and aged for 16 h at 60 °C. After cooling to room temperature, the mud was sifted through a previously weighted dry 500 μm sieve, was washed with KCl brine (15 g in 350 ml tap water) and very shortly with tap water. After drying with a cloth from the outside of the sieve, the wet contents were weighted, dried at 110 °C and weighted again. The results are given in the following Table 4. Weight percentages are based on the 25 g of cuttings that were added to the drilling fluid.

**Table 4:** Properties of inventive and comparative compositions

| Shale Inhibitor | Wet weight | Dry residue | Water absorption |
|---|---|---|---|
| "Blank" (0.0 g) | - 54 % (*) | 19 % | n.a. |
| Oligoglucosamine 1 (5.0 g) | + 41 % | 73 % | +57 % |
| Oligoglucosamine 2 (10.0 g) | + 40 % | 73 % | +56 % |
| Polylysine (reference) (5.0 g) | + 45 % | 71 % | + 62 % |
| * Mass loss due to particle disintegration. | | | |

The results indicate that the inventive oligoglucosamine shale inhibitors inhibit clay swelling comparable with the polylysine reference and are, therefore, capable of avoiding swelling of shale. Further, it can be seen that the oligoglucosamines show a good synergistic effect with the shale encapusulator and greatly improves the integrity of shale cuttings and prevents dispersion.

Bulk Hardness Test

A drilling fluid was prepared from 323 g of tap water, 73.2 g of NaCl, 1.0 g of NaOH, 10 g of Bentonite (Cebogel, Cebo Holland B.V., NL), 2.5 g of Polydrill® (BASF SE, a rheology-neutral, salt-intensitive fluid-loss inhibitor), and 2.5 g of the respective shale inhibitor (or 0 g for the "blank" value). 350 ml of the drilling fluid was placed into aging cell and 50 g of cuttings (Bentone GWB, 2-5 mm, Tolsa, Middlesbrough, GB) was added. The cell was pressurized with nitrogen and dynamically aged for 16 h at 65°C in a hot roller oven (OFI Testing Equipment®, US). The cell was cooled for 30 minutes in the air and then 30 minutes submersed in water. The vessel was opened and the mixtures was poured over a 500 μm sieve and washed with 250 ml of sodium chloride brine (73.2 g of NaCl in 323 ml water) to remove the mud from the particles. The cuttings were filled in the hardness tester, excess fluid was wiped off, the cuttings were pressed through the hardness tester using a torque wrench, and the continuous torque necessary to press the cuttings through was noted. The cuttings' consistency was noted. The results are given in the following Table 5.

**Table 5:** Bulk hardness of inventive and comparative compositions

| Shale Inhibitor | "Blank" | Ultrahib® | Oligoglucosamine 2 (Heppe) | Oligoglucosamine 1 | Polylysine (reference 1) |
|---|---|---|---|---|---|
| Torque [Nm] | 10 | 40 | 18 | 15 | 43 |
| Cuttings' Consistency | Soft | Crumbly | Crumbly | Medium-hard | Hard, crumbly |

The results show that the torque is increased by application of inventive oligoglucosamines compared to the "blank" reference which indicates that the hydration and dispersion of cuttings is suppressed effectively. It can be seen that the Oligoglucosamine shows a positive effect on bulk hardness of the shale cuttings at a lower extent compared to Ultrahib® oder Polylysine.

## Claims

1. Well fluid comprising at least one oligoglucosamine and/or a salt thereof, having a weight average molecular weight Mw in the range of 500 to 20,000 g/mol.

2. Well fluid according to claim 1, wherein said well fluid is a water-based well fluid.

3. Well fluid according to claim 1 or 2, comprising

   i) 0.1 to 30.0 wt.-% of the at least one oligoglucosamine and/or salt thereof, and
   ii) 70.0 to 99.9 wt.-% of water,

   based on the overall weight of the well fluid.

4. Well fluid according to any one of the preceding claims, further comprising 0.1 to 10.0 wt.-% of a shale encapsulator, based on the overall weight of the well fluid.

5. Well fluid according to claim 4, wherein the shale encapsulator is an acrylic acid copolymer.

6. Well fluid according to any one of the preceding claims, further comprising 0.001 to 2.0 wt.-% of a defoamer, based on the overall weight of the well fluid.

7. Well fluid according to any one of the preceding claims, wherein the amount of acylated $NH_2$-moieties of the at least one oligoglucosamine and/or salt thereof is below 50 %, based on the overall amount of $NH_2$-moieties in the oligoglucosamine chain.

8. Well fluid according to any one of the preceding claims, wherein the at least one oligoglucosamine and/or salt thereof is obtained by

   i) deacetylation of chitin, thereby obtaining chitosan, and
   ii) depolymerizing the chitosan obtained in step i), thereby obtaining the at least one oligoglucosamine and/or salt thereof.

9. Well fluid according to claim 8, wherein the deacetylation according to step i) is carried out

   a) in aqueous solution comprising 40.0 to 80.0 g/100 mL of a base, and/or
   b) at a temperature in the range of 100 to 170 °C.

10. Well fluid according to claim 8 or 9, wherein the depolymerization according to step ii) is carried out

   a) in aqueous solution comprising 0.1 to 10.0 wt.-% of a peroxide, and/or
   b) at a temperature in the range of 50 to 100 °C.

11. Well fluid according to any one of the preceding claims, wherein the well fluid is a drilling fluid, completion fluid or stimulation fluid.

12. Use of an oligoglucosamine and/or salt thereof having a weight average molecular weight in the range of 500 to 20,000 g/mol in the development, exploitation and completion of underground mineral oil and natural gas deposits and in deep wells.

13. Use according to claim 12, wherein the oligoglucosamine and/or salt thereof is used as a shale inhibitor in water-based drilling fluids, completion fluids or stimulation fluids.

14. Drilling process, comprising the steps of

   i) providing a well fluid according to any one of claims 1 to 11,
   ii) pumping said well fluid into an oil well, thereby obtaining a composition comprising the well fluid and shale,
   iii) pumping the composition obtained in step ii) out of the oil well.

Europäisches Patentamt
European Patent Office
Office européen des brevets

# EUROPEAN SEARCH REPORT

Application Number
EP 17 17 8029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/165631 A1 (DANOUX LOUIS [FR] ET AL) 27 July 2006 (2006-07-27)<br>* paragraphs [0003] - [0005], [0020] - paragraphs [0021], [0058], [0121]; claims 17,18; table 3 * | 1-11 | INV.<br>C09K8/035<br>C07H5/06<br>C09K8/90 |
| X<br><br>A | JP H04 210615 A (SARUNO RINJIRO) 31 July 1992 (1992-07-31)<br>* Paragraphs [0001] from the machine translated document.; claim 1 * | 1,2,8-11<br><br>3-7, 12-14 | |
| Y | AN YUXIU ET AL: "An environmental friendly and biodegradable shale inhibitor based on chitosan quaternary ammonium salt", JOURNAL OF PETROLEUM SCIENCE AND ENGINEERING, ELSEVIER, AMSTERDAM, NL, vol. 135, 14 September 2015 (2015-09-14), pages 253-260, XP029308833, ISSN: 0920-4105, DOI: 10.1016/J.PETROL.2015.09.005<br>* Abstract and conclusion; columns 2,3,4,15 * | 12-14 | TECHNICAL FIELDS SEARCHED (IPC)<br>C09K<br>C07H |
| Y<br><br>A | WO 2016/057746 A1 (MI LLC [US]) 14 April 2016 (2016-04-14)<br>* claims 14-16 * | 12-14<br><br>1-11 | |
| A | WO 2016/096970 A1 (BASF SE [DE]) 23 June 2016 (2016-06-23)<br>* pages 1,2,3,19 * | 1-14 | |

-/--

The present search report has been drawn up for all claims

| Place of search | Date of completion of the search | Examiner |
|---|---|---|
| Munich | 22 January 2018 | Philippart, Anahí |

4

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 2

Europäisches Patentamt
European Patent Office
Office européen des brevets

# EUROPEAN SEARCH REPORT

Application Number
EP 17 17 8029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TIAN F ET AL: "Study of the depolymerization behavior of chitosan by hydrogen peroxide", CARBOHYDRATE POLYM, APPLIED SCIENCE PUBLISHERS, LTD. BARKING, GB, vol. 57, no. 1, 12 August 2004 (2004-08-12), pages 31-37, XP004522739, ISSN: 0144-8617, DOI: 10.1016/J.CARBPOL.2004.03.016 * columns 1,2 - columns 3,7,9,11; table 3 * ----- | 1-10 | |

TECHNICAL FIELDS SEARCHED (IPC)

The present search report has been drawn up for all claims

4

| Place of search | Date of completion of the search | Examiner |
|---|---|---|
| Munich | 22 January 2018 | Philippart, Anahí |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO.

EP 17 17 8029

This annex lists the patent family members relating to the patent documents cited in the above-mentioned European search report. The members are as contained in the European Patent Office EDP file on
The European Patent Office is in no way liable for these particulars which are merely given for the purpose of information.

22-01-2018

| Patent document cited in search report | Publication date | Patent family member(s) | Publication date |
|---|---|---|---|
| US 2006165631 A1 | 27-07-2006 | EP 1440683 A1 | 28-07-2004 |
| | | EP 1585495 A1 | 19-10-2005 |
| | | JP 2006514074 A | 27-04-2006 |
| | | KR 20050092783 A | 22-09-2005 |
| | | US 2006165631 A1 | 27-07-2006 |
| | | WO 2004064800 A1 | 05-08-2004 |
| JP H04210615 A | 31-07-1992 | NONE | |
| WO 2016057746 A1 | 14-04-2016 | GB 2545604 A | 21-06-2017 |
| | | US 2017247595 A1 | 31-08-2017 |
| | | WO 2016057746 A1 | 14-04-2016 |
| WO 2016096970 A1 | 23-06-2016 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0634468 A1
- US 6484821 B1
- EP 1257610 B1


### Non-patent literature cited in the description


- **AN et al.** *Journal of Petroleum Science and Engineering,* 2015, vol. 135, 253-260
- **PATEL et al.** Highly Inhibitive Water-Based Fluid System Provides Superior Chemical Stabilization of Reactive Shale Formations. National Drilling Conference, 2001
- **F. TIAN ; Y. LIU ; K. HU ; B. ZHAO.** *Carbohydrate Polymers,* 2004, vol. 57, 31-37
- **C.Q. QIN ; Z.M. DU ; L. XIAO.** *Polymer Degradation and Stability,* 2002, vol. 76, 211-218
- **STEPHENS et al.** Laboratory Methods to Assess Shale Reactivity with Drilling Fluids. *AADE Technical Conference & Exhibition New Orleans,* 2009